(19)

Europäisches
Patentamt
European
Patent Office
Office européen
des brevets

(11) **EP 2 505 490 A1**

(12) **EUROPEAN PATENT APPLICATION**

(43) Date of publication:
**03.10.2012 Bulletin 2012/40**

(51) Int Cl.:
***B64C 1/06*** (2006.01)     ***F16F 7/12*** (2006.01)

(21) Application number: **11159939.5**

(22) Date of filing: **28.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Airbus Opérations SAS
31060 Toulouse (FR)**

(72) Inventors:
• **Roques, Jean-Claude
  31500, TOULOUSE (FR)**
• **Antypas, Jérôme
  31830, PLAISANCE-DU-TOUCH (FR)**
• **Boetsch, Régis
  31530, LASSERRE (FR)**

(54) **Shock absorber**

(57)     A shock absorber **(21)** to be used for an aircraft comprises a shell **(23)** having, in use, an upper wall **(25),** a lower wall **(26),** and side walls **(24),** and an array of hollow cylinders **(27)** encased within the shell **(23).** The hollow cylinders **(27)** are aligned so as to have their central axes extend perpendicular to the upper wall **(25)** of the shell **(23).** The shock absorbers **(21)** are made of an isotropic material. The invention also relates to an energy absorbing cargo floor structure having a plurality of shock absorbers **(21).**

Fig 4

EP 2 505 490 A1

**Description**

This invention relates to shock absorbers for use on an air vehicle, and more particularly with an aircraft.

There are various methods to absorb energy from an impact on a fuselage of an aircraft. For instance, it is known from GB 2444645 to incorporate Carbon Fibre Reinforced Plastic (CFRP) rods between the fuselage frames and the fuselage cross-beams. The use of CFRP in aero structures is desirable where possible due to their very high ratio of mechanical tensile strength versus material density, thus providing a weight saving. However, it is well known that the use of rods is not optimal for protection against compressive loads and that the superior tensile strength characteristics of the anisotropic materials, such as CFRP, are limited to the elastic domain.

It is an object of this invention to provide an improved shock absorber which overcomes or minimizes the above problem.

According to the first aspect of the invention there is provided a shock absorber for use in an air vehicle, comprising a shell having, in use, an upper wall, a lower wall and side walls, and a packed array of hollow cylinders encases within the shell in which the cylinders are aligned so as to have their central axes extend perpendicular to the upper wall of the shell.

Preferably, the hollow cylinders and the shell are made of an isotropic material such as titanium, stainless steel or aluminium alloy materials.

Conveniently, each cylinder has a nominal wall thickness in the range from about 0.1mm to about 1mm and a length range from about 200mm to about 225mm. The thickness of the upper wall, lower wall, and side walls of the shell are also in the range from about 0.1 mm to about 1 mm.

This invention also provides, according to a further aspect, an energy absorbing floor cargo structure for an aircraft comprising a plurality of panels, at least one floor beam, a fuselage frame, a plurality of shock absorbers, which are in accordance with the first aspect of the invention, located between the floor beams and the fuselage frames, and fastening devices for attaching each shock absorber to the floor beam and the fuselage frame.

Preferably, the panels are made of an anisotropic material such as Carbon Fibre Reinforced Plastic (CFRP).

The invention will now be described by way of example with reference to the accompanying drawings, of which:

Figure 1 is a side view of a fuselage of an aircraft;
Figure 2 is a cross-sectional view of Figure 1 taken along the line A-A equipped with a shock absorber according to the present invention;
Figure 3 is a top view of the shock absorber shown in Figure 2;

Figure 4 is a side view of the shock absorber shown in Figure 3;
Figure 5 is a perspective view of an element of the shock absorber shown in Fig 3;
Figure 6 is a perspective view of a portion of a lower section of the fuselage shown in Figure 1 where the shock absorbers are installed according to the invention; and
Figure 7 is a partially exploded side elevation view of a portion of the shock absorber assembly of Figure 6.

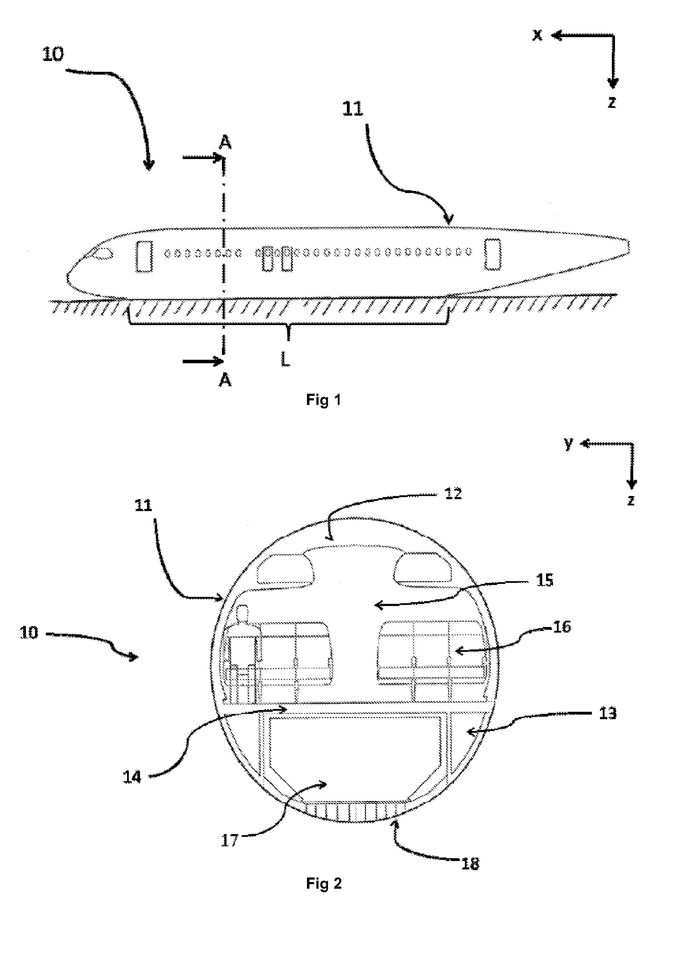

Referring to Figures 1 and 2, there is shown an aircraft **10** comprising a cylindrical fuselage **11** defining an interior space that is separated into an upper lobe **12** and a lower lobe **13** by a floor **14**. The upper lobe **12** includes a passenger compartment **15** in which passenger seats **16** are located. The lower lobe **13** includes a cargo area **17** and an energy absorbing cargo floor structure **18** forming the first part of the aircraft **10** to impact the ground in the event of a wheels-up "belly" landing.

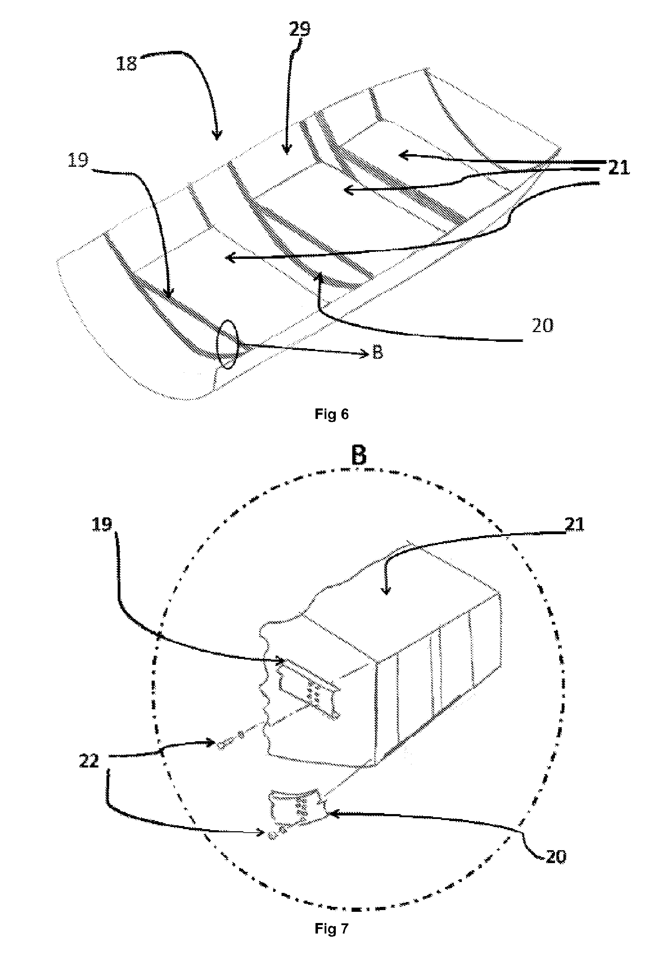

As can best be seen in Figure 6, the energy absorbing floor cargo structure **18** comprises a plurality of transversely extending floor beams **19** connected at their outer ends to a curved fuselage frame **20** and shock absorbers **21** located between the floor beams **19** and the curved fuselage frame **20**. The shock absorbers **21** are located at the bottom level of the fuselage **11** along the length L of the aircraft **10** as depicted in Figure 1. Each shock absorber **21** is attached via a fastening device **22** (Figure 7), such as rivets or blind bolts, to the floor beams **19** and the fuselage frames **20**.

Each shock absorber **21** comprises a shell **23** having an upper wall **25,** a lower wall **26** and side walls **24.** The shell **23** encases a packed array of hollow cylinders **27,** in this example 5 x at least 2, all of which are aligned so as to have their centre lines **28** extend perpendicular to the upper wall **25** of the shell **23**. Both the shell **23** and the hollow cylinders **27** are made of an isotropic material, such as stainless steel, titanium or aluminium alloy materials.

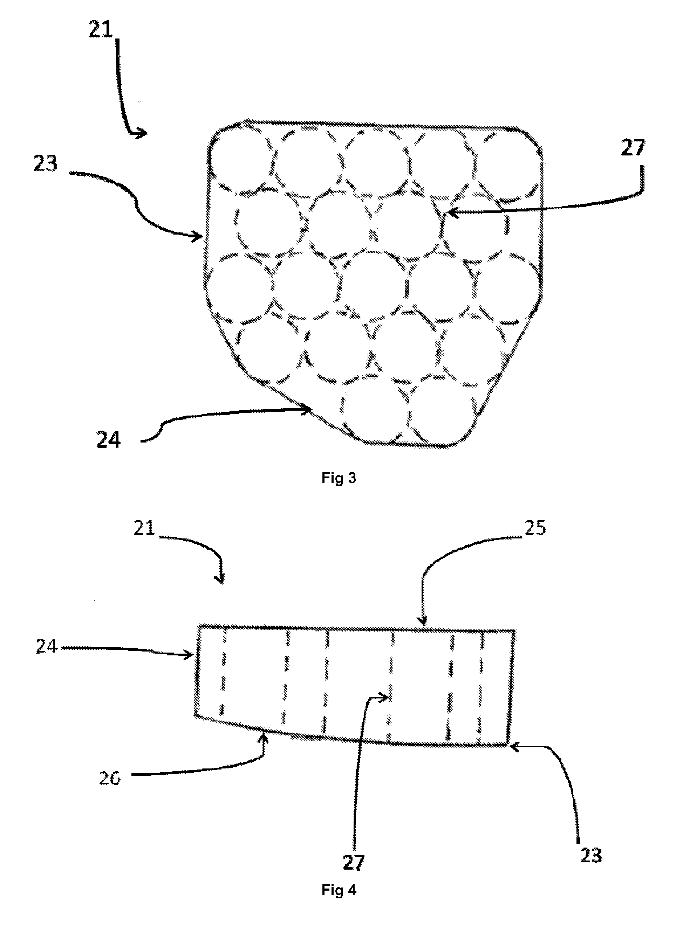

As can best be seen in Figure 4, the lower wall **26** of the shell **23** is substantially curved and arranged to adopt the curved fuselage frame **20** of the aircraft **10** so that the length L of the array of hollow cylinders **27** varies according to the curvature of the fuselage frame **20**.

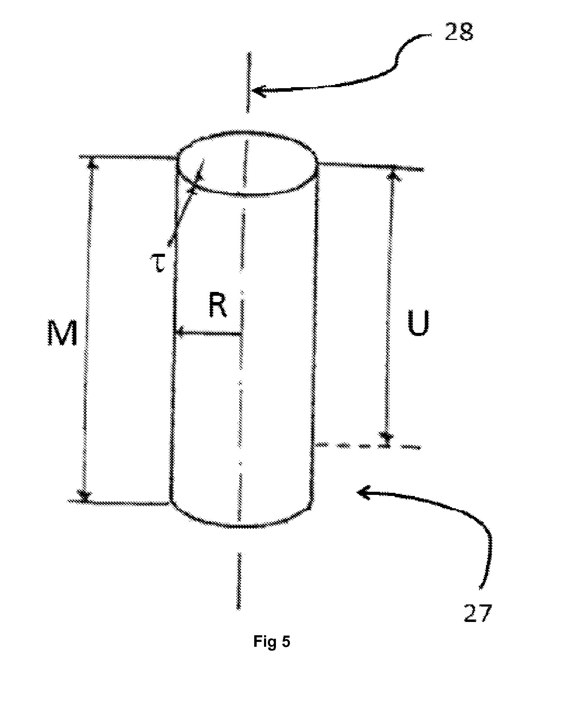

It would be appreciated that the geometry of the hollow cylinders **27** of a shock absorber **21** depends on the impact requirements for the aircraft **10**. That is, stiffness tunability is tailored for a specific application by varying the length and the wall thickness of the hollow cylinders **27**. For example, as can best be seen in Figure 5, the minimum length "M" of each hollow cylinders **27** is determined by using the identity M>U, where U is the maximum required strain as defined by the formula:

$$U = gh/a$$

Where g is the acceleration due to gravity, h is the freefall height and a is the acceleration of the aircraft **10.** Hence, the length of each hollow cylinder **27** may broadly range from about 200mm to about 225mm.

Similarly, the nominal thickness of each hollow cylinder **27** is determined by the following formula:

$$F = \frac{(0.6\pi)E\tau^2}{\eta}$$

Where F is the total buckling force of an impact, E is the modulus of elasticity of the isotropic material used, η is the number of hollow cylinders **27** required, and τ is the wall thickness of the hollow cylinders **27.** More specifically, the nominal wall thickness of the hollow cylinders **27** for an aircraft may generally range from about 0.1mm to 1mm. The thickness of the upper wall **25,** lower wall **26,** and side walls **24** of the shell **23** are also in the range from about 0.1mm to about 1 mm.

It would be appreciated that when the hollow cylinder **27** and the shell **23** are made of aluminium, due to manufacturing constraints, the wall thicknesses would occupy the upper end of this range. On the contrary, when the hollow cylinder **27** and the shell **23** are made of titanium and stainless steel, the wall thicknesses occupies the lower end of this range.

Upon ground impact during, for instance, a "belly" landing, each hollow cylinder **27** within the shock absorbers **21** will collapse axially so as to absorb a maximum level of energy from the impact in a controlled manner rather than buckling. The side walls **24** of the shell **23** also bend absorbing a maximum energy from the impact. The upper wall **25** and lower wall **26** spread the force of the impact more evenly over the array of hollow cylinders **27** rather than being concentrated at locations where the shock absorbers **21** are fastened to the floor beams **19** and fuselage frames **20.** It would be appreciated that the fuselage frame **20** is also absorbing energy from the impact by bending.

The shock absorbers **21** and the energy absorbing cargo floor structure **18** as described herein have the advantages of offering the same controlled manner absorbing effect even when impacted with a load which is out of plane to the centre lines **28** of each hollow cylinder **27.**

In another variant, the packed array of hollow cylinders **27** is arranged in at least one line. For an array of hollow cylinders **27** arranged in one line, it is easy to envisage the shock absorber **21** sandwiched between the floor beam **19** and the fuselage frame **20.**

Furthermore, when such a shock absorber **21** is implemented on a fuselage **11** of an aircraft **10** having panels **29** made of an anisotropic material, such as CFRP, the shell **23** offers galvanic corrosion protection when made of titanium.

In a variant at least one shock absorber **21** as described herein is implemented on the lower part of the fuselage of a helicopter.

**Claims**

1. A shock absorber **(21)** for use in an air vehicle, **characterized in that** the shock absorber comprises a shell **(23)** having, in use, and upper wall **(25),** a lower wall **(26),** and side walls **(24),** and a packed array of hollow cylinders **(27)** encased within said shell **(23)** in which the hollow cylinders **(27)** are aligned so as to have their centre lines **(28)** extend perpendicular to the upper wall **(25)** of the shell **(23).**

2. The shock absorber **(21)** as claimed in claim 1, **characterised in that** the array of hollow cylinders **(27)** is arranged in at least one line

3. A shock absorber **(21)** as claimed in claim 1 or claim 2, in which the hollow cylinders **(27)** and the shell **(23)** are made of an isotropic material such as titanium, stainless steel or aluminium alloy materials.

4. A shock absorber **(21)** as claimed in any one of claims 1 to 3 **characterised in that** each hollow cylinder **(27)** has a nominal wall thickness in the range from 0.1mm to 1 mm.

5. A shock absorber **(21)** as claimed in any one of claims 1 to 4 **characterised in that** each hollow cylinder **(27)** has a length which is of the range from 200mm to 225mm.

6. A shock absorber **(21)** as claimed in any of claims 1 to 5 **characterised in that** the thickness of the upper wall **(25),** lower wall, **(26),** and side walls **(24),** of the shell **(23)** are of the range from 0.1 mm to 1 mm

7. A shock absorber **(21)** as claimed in any one of claims 1 to 6, further comprising fastening devices **(22).**

8. An energy absorbing cargo floor structure **(18)** for an aircraft comprising a plurality of panels **(29),** at least one floor beam **(19),** a fuselage frame **(20),** a plurality of shock absorbers **(21),** which are in accordance with any one of claims 1 to 7, located between the floor beams **(19)** and the fuselage frame **(20),** and fastening devices **(22)** to for attach each shock absorber **(21)** to the floor beam **(19)** and the fuselage frame **(20).**

**9.** An energy absorbing cargo floor structure **(18)** as claimed in claim 8 **characterised in that** the panels **(29)** are made of an anisotropic material such as Carbon Fiber Reinforced Plastic.

**Fig 1**

**Fig 2**

Fig 3

Fig 4

**Fig 5**

29

18

19

21

B

20

**Fig 6**

**B**

19

21

22

20

**Fig 7**

**Europäisches Patentamt**
**European Patent Office**
**Office européen des brevets**

## EUROPEAN SEARCH REPORT

Application Number

EP 11 15 9939

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GB 2 345 113 A (ROLLS ROYCE PLC [GB]) 28 June 2000 (2000-06-28) * figure 1 * | 1-9 | INV. B64C1/06 F16F7/12 |
| Y | WO 98/30772 A1 (BRITISH STEEL PLC [GB]; SHEMWELL KENNETH [GB]) 16 July 1998 (1998-07-16) * figures 1,2 * | 1-9 | |
| Y | EP 1 426 289 A1 (KAWASAKI HEAVY IND LTD [JP]) 9 June 2004 (2004-06-09) * figures 3,10 * | 1,2,4-9 | |
| Y | EP 0 497 142 A2 (YOKOHAMA RUBBER CO LTD [JP]) 5 August 1992 (1992-08-05) * figure 3 * | 1,2,4-9 | |
| Y,D | GB 2 444 645 A (BOEING CO [US]) 11 June 2008 (2008-06-11) * figure 5 * | 8,9 | |
| A | WO 02/46036 A1 (AIRBUS FRANCE [FR]; BERAL BRUNO [FR]; SOUQUET JEAN MARC [FR]) 13 June 2002 (2002-06-13) * the whole document * | 1-9 | TECHNICAL FIELDS SEARCHED (IPC) B64C F16F B60R |

The present search report has been drawn up for all claims

| Place of search | Date of completion of the search | Examiner |
|---|---|---|
| Munich | 6 July 2011 | Pedersen, Kenneth |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 15 9939

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2011

| Patent document cited in search report | | Publication date | Patent family member(s) | | Publication date |
|---|---|---|---|---|---|
| GB 2345113 | A | 28-06-2000 | NONE | | |
| WO 9830772 | A1 | 16-07-1998 | AU | 5566098 A | 03-08-1998 |
| EP 1426289 | A1 | 09-06-2004 | DE | 60307208 T2 | 26-07-2007 |
| | | | DE | 60317110 T2 | 07-08-2008 |
| | | | JP | 3888630 B2 | 07-03-2007 |
| | | | JP | 2004182136 A | 02-07-2004 |
| | | | US | 2005001093 A1 | 06-01-2005 |
| EP 0497142 | A2 | 05-08-1992 | JP | 2858181 B2 | 17-02-1999 |
| | | | JP | 5118370 A | 14-05-1993 |
| | | | US | 5264259 A | 23-11-1993 |
| GB 2444645 | A | 11-06-2008 | US | 2009206202 A1 | 20-08-2009 |
| WO 0246036 | A1 | 13-06-2002 | AT | 307757 T | 15-11-2005 |
| | | | AU | 1615702 A | 18-06-2002 |
| | | | CA | 2430703 A1 | 13-06-2002 |
| | | | DE | 60114455 D1 | 01-12-2005 |
| | | | DE | 60114455 T2 | 13-07-2006 |
| | | | EP | 1349777 A1 | 08-10-2003 |
| | | | ES | 2250520 T3 | 16-04-2006 |
| | | | FR | 2817608 A1 | 07-06-2002 |
| | | | RU | 2286918 C2 | 10-11-2006 |
| | | | US | 2004040252 A1 | 04-03-2004 |

EPO FORM P0459

For more details about this annex : see Official Journal of the European Patent Office, No. 12/82

**EP 2 505 490 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2444645 A